Europäisches Patentamt

(19) European Patent Office

Office européen des brevets

(11) EP 0 913 186 A1

(12) EUROPEAN PATENT APPLICATION
published in accordance with Art. 158(3) EPC

(43) Date of publication:
06.05.1999 Bulletin 1999/18

(51) Int. Cl.$^6$: B01D 69/08, B01D 71/10,
D01D 5/24, D01F 2/04

(21) Application number: 97902630.9

(22) Date of filing: 07.02.1997

(86) International application number:
PCT/JP97/00330

(87) International publication number:
WO 98/34719 (13.08.1998 Gazette 1998/32)

(84) Designated Contracting States:
DE FR GB IT NL

(71) Applicant:
Asahi Kasei Kogyo Kabushiki Kaisha
Osaka-shi, Osaka 530-8205 (JP)

(72) Inventors:
• FUKUDA, Makoto
  Miyazaki 882 (JP)

• MIYAZAKI, Makato
  Miyazaki 882 (JP)

(74) Representative:
von Kreisler, Alek, Dipl.-Chem. et al
Patentanwälte,
von Kreisler-Selting-Werner,
Bahnhofsvorplatz 1 (Deichmannhaus)
50667 Köln (DE)

(54) HOLLOW FIBER MEMBRANE AND METHOD OF MANUFACTURING SAME

(57) There is disclosed a hollow fiber membrane with excellent substance-separating capability and superior performance for removal of high molecular weight substances in blood, particularly $\beta_2$ microglobulin (molecular weight: 11,800 daltons) when used for hemodialysis, while preventing penetration of endotoxin fragments from the dialyzing solution into the bodies of patients, and exhibiting excellent biocompatibility. The hollow fiber membrane is characterized by having a water transmissivity of 30-300 ml/m$^2$ · hr · mmHg and a membrane thickness of 5-50 μm, by having a pore size $D_1$ on the inner wall surface such that $10 \leq D_1 \leq 300$ nm, a pore size $D_2$ on the outer wall surface such that $0.6 D_1 \leq D_2 \leq 1.2 D_1$ and a pore size $D_3$ inside the membrane such that $D_3 \geq 1.2 D_1$, wherein the pore size increases in a continuous manner from the inner wall surface toward the interior of the membrane while decreasing in a continuous manner from the interior of the membrane toward the outer wall surface, at least one maximum size area is present in the interior of the membrane, and the inner wall layer pore size increase rate ($\rho_1$) and outer wall layer pore size decrease rate ($\rho_2$) are each 20-200%

The hollow fiber membrane of the invention is manufactured by discharging a spinning solution comprising a polymer and a polymer solvent from the outer spinning aperture of a double annular spinning nozzle while discharging a hollow-forming agent from the inner spinning aperture, and coagulating the spinning solution in a coagulating bath of at least two stages comprising a solution which gives a higher coagulation speed than water.

Fig.1

EP 0 913 186 A1

Printed by Xerox (UK) Business Services
2.16.7/3.6

## Description

<u>Technical Field</u>

The present invention relates to a hollow fiber membrane which has a novel fine porous structure and is suitable for separation of substances, and particularly it relates to a highly safe hollow fiber membrane which is very efficient in removing high molecular weight substances during blood dialysis, especially $\beta_2$ microglobulin (molecular weight: 11,800 daltons), has excellent biocompatibility, and which can prevent penetration of endotoxin fragments contained in dialyzing solutions into the bodies of patients.

<u>Background Art</u>

Techniques for separating different components in solutions by dialysis, filtration or the like through hollow fiber membranes are widely known. Materials used for hollow fiber membranes include cellulose and synthetic high molecular compounds. Hemodialysis is a typical substance separation process which employs hollow fiber membranes. Regenerated cellulose membranes, particularly cuprammonium process regenerated cellulose membranes, are widely used for hemodialysis, and with advancements in hemodialysis apparatuses and dialysis techniques, they are playing a major role in extending the lives of and restoring social activity to renal failure patients. This is because regenerated cellulose membranes exhibit excellent dialysis performance and mechanical strength, and are highly safe as evidenced by many years of actual results in use.

When hollow fiber membranes are used for hemodialysis, the hollow fiber membranes remove waste products such as urea and NaCl by dialysis while inhibiting the passage of high molecular weight proteins such as albumin. Therefore, when chronic renal failure patients continue to undergo hemodialysis over long periods of time, it has been found that they frequently suffer from complications such as anemia, hypertension, chromatosis, and ostalgic or arthralgic disorders. As a result of progressing study on causes and research on effective measures, it has been determined that one of these complications, carpal tunnel syndrome, occurs largely in connection with accumulation of $\beta_2$ microglobulin in the body, and therefore a hemodialysis membrane which can remove $\beta_2$ microglobulin has been desired.

Hollow fiber membranes developed towards solving this problem have exhibited improved performance for removal of $\beta_2$ microglobulin based on increased pore size of the membrane (for example, Japanese Unexamined Patent Publications No. 2-135130, No. 2-211229 and No. 3-8422). However, while these membranes offer improved performance for removal of $\beta_2$ microglobulin due to their large pore sizes, because they have a membrane structure wherein the pore size of the inner wall surface of the membrane is larger than the pore size of the outer wall surface, i.e. a reverse gradient structure, the higher molecular weight proteins in the blood accumulate inside the membrane, thereby creating problems with biocompatibility. Specifically, certain types of high molecular weight proteins are activated by contact with the membrane material, and physiologically active substances are thus released. For example, activation of blood clotting factor XII (molecular weight: 80,000), prekallikrein (molecular weight: 88,000) and high molecular kininogen (molecular weight: 150,000) produces the known physiologically active substance bradykinin, and activation of the complement system proteins $C_3$ (molecular weight: 185,000) and $C_5$ (molecular weight: 191,000) produces anaphylatoxin, which has physiological activity including an effect of causing histamine release from mast cells. It is therefore desirable to reduce to a minimum the production of bradykinin and anaphylatoxin in hemodialysis membranes. To this end it becomes necessary to suppress activation of high molecular weight proteins, i.e. to inhibit penetration of high molecular weight proteins into the membrane and to reduce the contact area of the membrane with high molecular weight proteins.

As a means of solving this problem there are known membranes wherein the pore size at the inner wall surface of the membrane is smaller than the pore size at the outer wall surface, i.e. with a gradient structure (for example, Japanese Unexamined Patent Publication No. 2-273522). This type of membrane exhibits high performance for removal of $\beta_2$ microglobulin and has excellent biocompatibility.

However, a recent problem has arisen when using large pore size hollow fiber membranes for hemodialysis, in that endotoxin fragments contained in dialyzing solutions (endotoxins are actually lipopolysaccharides making up 20% of the cell wall components of gram-negative bacilli) penetrate into the blood from the dialyzing solution through the large pore size membrane. Dialyzing solutions for hemodialysis are usually used after diluting the concentrated solutions with water, and tap water is generally used for the dilution in Europe and Japan. Although the problem of gram negative bacilli contamination was known when hollow fiber membranes first began to be used for hemodialysis, it was not given much attention. This is because the endotoxin fragments which are structural components of the cell walls of gram negative bacilli have molecular weights from about 2,000 to 30,000 daltons and are blocked by all hemodialysis membranes, so that it was believed impossible for endotoxin fragments to migrate into the blood through the hemodialysis membranes. However, with advancing development of high-performance large pore size membranes for removal of high molecular weight substances, the problem was recognized as it became clear that the endotoxin fragments permeate into the blood from the dialyzing solutions through such high-performance membranes.

While only very trace amounts of endotoxins penetrate into the bodies of patients, upon confirmation that they induce inflammatory cytokines mainly through the interleukin network and thereby exhibit various forms of physiological activity, and are causative factors of dialysis complications which include fever and other cold-like symptoms, arteriosclerosis, and ostalgic or arthralgic disorders, an even more urgent demand has arisen for inhibiting penetration of endotoxins from dialyzing solutions into the bodies of patients.

Consequently, hollow fiber membranes used as hemodialysis membranes are desired to exhibit a reciprocal kind of performance, whereby they allow passage of $\beta_2$ microglobulin from the blood into the dialyzing solution while preventing passage of endotoxin fragments of about 2,000 to 30,000 daltons from the dialyzing solution into the blood.

As a solution to this problem there has been proposed a technique involving removal of endotoxin fragments in dialyzing solutions prior to their use for hemodialysis (for example, Japanese Unexamined Patent Publications No. 7-213603 and No. 236885). These techniques are also associated with problems, in that they inevitably require more complex hemodialysis apparatuses and more complicated procedures, or else an endotoxin remover must be provided separately from the hemodialysis apparatus, thus complicating the dialysis treatment process.

Disclosure of the Invention

It is an object of the present invention to provide a hollow fiber membrane which is capable of exhibiting excellent performance for removal of high molecular weight substances such as $\beta_2$ microglobulin, while preventing penetration of high molecular weight proteins into the interior of the membrane and preventing penetration of endotoxin fragments from the dialyzing solution into the body of the patient.

The present invention is a hollow fiber membrane with a water transmissivity of 30-300 ml/m$^2$ • hr • mmHg and a membrane thickness of 5-50 $\mu$m, having pores which satisfy the following conditions ① to ④, wherein the pore size increases in a continuous manner from the inner wall surface toward the interior of the membrane while decreasing in a continuous manner from the interior of the membrane toward the outer wall surface, and the hollow fiber membrane has at least one maximum size area in the interior of the membrane.

① $10 \leq D_1 \leq 300$ nm        $D_1$: pore size on inner wall surface

② $0.6\, D_1 \leq D_2 \leq 1.2\, D_1$        $D_2$: pore size on outer wall surface

③ $D_3 \geq 1.2\, D_1$        $D_3$: pore size inside membrane

④ Inner wall layer pore size increase rate ($\rho_1$) and outer wall layer pore size decrease rate ($\rho_2$) = 20-200% ($\rho_1$ and $\rho_2$ are, respectively, the rate of increase in pore size from the inner wall surface to 3/10 of the membrane thickness from the inner wall surface, and the rate of decrease in pore size from the outer wall surface to 3/10 of the membrane thickness from the outer wall surface, based on 10 equal divisions of the membrane thickness.)

The material used to construct the hollow fiber membrane of the invention is preferably a material suitable for wet spinning, examples of which include cellulose, cellulose acetate, nitrocellulose, polysulfone, polyacrylonitrile, polyamide, polyimide, polycarbonate, polymethyl methacrylate, polyvinyl alcohol, and polymer mixtures of two or more of these.

A cellulose-based polymer such as cellulose, cellulose acetate or nitrocellulose is most preferred for use according to the invention, and particularly preferred is cuprammonium process regenerated cellulose.

The hollow fiber membrane of the invention may be manufactured by a process characterized by discharging a spinning solution comprising a polymer and a polymer solvent from the outer spinning aperture of a double annular spinning nozzle while discharging a hollow-forming agent from the inner spinning aperture, and coagulating the spinning solution in a coagulating bath of at least 2 stages comprising a solution which gives a higher coagulation speed than water.

Brief Description of the Drawing

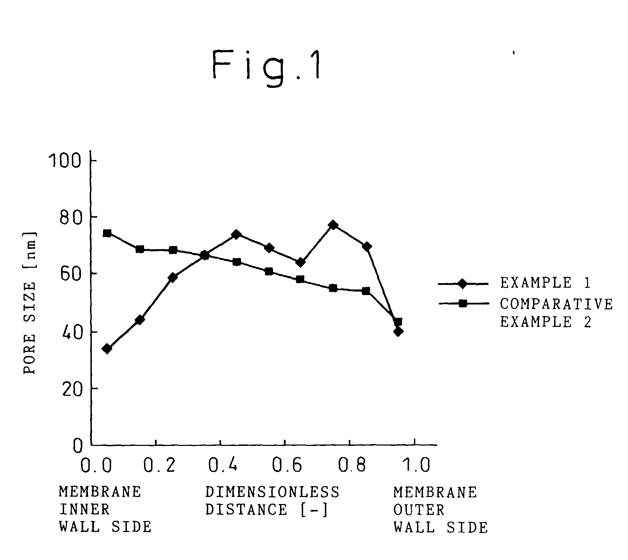

Fig. 1 is a graph showing an example of pore size distribution in the direction of thickness of a hollow fiber membrane according to the invention.

Best Mode for Carrying Out the Invention

The present invention will now be explained in more detail.

The water transmissivity of the hollow fiber membrane of the invention is 30-300 ml/m$^2 \cdot$ hr $\cdot$ mmHg. A higher water transmissivity for the hollow fiber membrane results in better performance for substance removal, and thus superior substance separation. If the water transmissivity is less than 30 ml/m$^2 \cdot$ hr $\cdot$ mmHg, the penetration rate for high molecular weight substances, particularly $\beta_2$ microglobulin, will be too low. If it exceeds 300 ml/m$^2 \cdot$ hr $\cdot$ mmHg, the useful protein substances in the blood will tend to leak into the dialyzing solution. A more preferred range for the water transmissivity is 30-80 ml/m$^2 \cdot$ hr $\cdot$ mmHg.

The hollow fiber membrane of the invention is characterized by having a fine porous structure. The pore size $D_1$ in the layers near the inner wall surface of the hollow fiber membrane of the invention must be from 10 nm to 300 nm. If the pore size $D_1$ exceeds 300 nm, high molecular weight proteins will penetrate into the membrane. If it is less than 10 nm, excellent performance for removal of high molecular weight substances such as $\beta_2$ microglobulin will not be maintained. The preferred pore size is from 20 nm to 100 nm.

The pore size $D_2$ of the fine pores in the layers near the outer wall surface must be such that $0.6\ D_1 \leq D_2 \leq 1.2\ D_1$. If $D_2$ is relatively smaller than $D_1$ ($0.6\ D_1 > D_2$), it will not be possible to maintain excellent performance for removal of high molecular weight substances such as $\beta_2$ microglobulin. Conversely, if it is relatively higher ($1.2\ D_1 < D_2$), endotoxin fragments will penetrate into the membrane from the dialyzing solution by the filtration effect, and will thus tend to penetrate into the blood.

The pore size $D_3$ in the interior of the membrane must be such that $D_3 \geq 1.2\ D_1$. If $D_3$ is less than $1.2\ D_1$, the porosity of the interior of the membrane will be too low, preventing expression of the excellent performance for removal of $\beta_2$ microglobulin.

The inner wall layer pore size increase rate ($\rho_1$) and outer wall layer pore size decrease rate ($\rho_2$) must be from 20-200%. $\rho_1$ and $\rho_2$ are, respectively, the rate of increase in pore size from the inner wall surface to 3/10 of the membrane thickness from the inner wall surface, and the rate of decrease in pore size from the outer wall surface to 3/10 of the membrane thickness from the outer wall surface, based on 10 equal divisions of the membrane thickness, and they are defined by the following equations. Here, $D_{x1}$ is the pore size from the inner wall surface to 3/10 of the membrane thickness, and $D_{x2}$ is the pore size from the outer wall surface to 3/10 of the membrane thickness.

$$\rho_1 = [(D_{x1}\text{-}D_1)/D_1] \times 100$$

$$\rho_2 = [(D_{x2}\text{-}D_2)/D_2] \times 100$$

If $\rho_1$ or $\rho_2$ is less than 20%, then the permeation resistance will increase for high molecular weight substances from the inner wall surface to 3/10 of the membrane thickness from the inner wall surface, and from the outer wall surface to 3/10 of the membrane thickness from the outer wall surface, making it impossible to maintain excellent removal performance. Also, if $\rho_1$ exceeds 200%, the permeation resistance for permeation of substances from the blood will be too low, thus promoting penetration of even high molecular weight proteins into the membrane. If $\rho_2$ exceeds 200%, the permeation resistance for permeation of substances from the dialyzing solution will be too low, thus promoting penetration of endotoxin fragments.

By manufacturing the hollow fiber membrane with this pore structure, it is possible to maintain excellent performance for removal of high molecular weight substances during hemodialysis, while also preventing penetration of endotoxin fragments from the dialyzing solution into the blood.

The hollow fiber membrane of the invention has a protein trap volume of 30 $\mu$g/cm$^2$ or less, and an endotoxin fragment mass transfer speed ratio of 1.0 or less.

If the protein trap volume exceeds 30 $\mu$g/cm$^2$, the high molecular weight proteins will be activated by the membrane, an undesirable situation in terms of biocompatibility. The volume is preferably no greater than 20 $\mu$g/cm$^2$. The protein trap volume represents the volume of residual protein in the pores of the membrane upon filtration of bovine plasma under a pressure of 50 mmHg, even after washing. Here, the protein trapped inside the membrane consists mostly of high molecular weight protein with a larger molecular weight than albumin (molecular weight: 66,000). The protein of smaller molecular weight than albumin, particularly $\beta_2$ microglobulin, as well as albumin itself, will elute out from the membrane during washing and are very unlikely to be trapped in the membrane. Thus, membranes with small protein trap volumes have superior biocompatibility because they reduce trapping of high molecular weight proteins by the thick membrane section.

The hollow fiber separation membrane according to the invention has an endotoxin fragment mass transfer speed ratio of 1.0 or less. The ratio of the mass transfer speed ($Pm_2$) from the outer wall side to the inner wall side with respect to the mass transfer speed ($Pm_1$) from the inner wall side to the outer wall side is defined as the mass transfer speed ratio ($Pm_2/Pm_1$). Like the water transmissivity, the mass transfer speed is also a representative parameter indicating the performance for removal of substances by hemodialysis membranes. A higher mass transfer speed gives higher performance for removal of the desired substances, for a superior hollow fiber separating membrane. Membranes with a low $Pm_2/Pm_1$ are preferred, however, to prevent penetration of endotoxin fragments into the body. From this viewpoint, the hollow fiber membrane of the invention preferably has a $Pm_2/Pm_1$ ratio of no greater than 1.0 for endotoxin fragments.

The methods for measuring the properties and pore structure of the hollow fiber membrane of the invention are the following.

(1) Water transmissivity

The water transmissivity is determined by preparing a lightweight module wherein both ends of the hollow fiber membrane bundle are anchored with an adhesive so that the hollow fiber membrane is exposed with a membrane area of about 100 $cm^2$, and after filling the interior of the membrane with water, closing one end, a pressure of 200 mmHg is applied from the open end, and the amount of water permeating through is measured.

(2) Protein trap volume

A module is prepared with both ends of the hollow fiber membrane bundle anchored with an adhesive so that the hollow fiber membrane is exposed with a membrane area of about 100-300 $cm^2$, and after immersing it for at least one hour in physiological saline, the physiological saline in the hollow sections is removed by suction with an aspirator. The hollow sections are then filled with bovine plasma and reacted at a temperature of 37°C for 60 minutes. After completion of the reaction, the bovine plasma is removed then by suction with an aspirator, and the hollow sections of the membrane are washed with physiological saline. A BCA protein assay reagent is used to assay the amount of protein trapped in the thick section of the membrane. Here, the amount of protein is assayed with adequate agitation by a rotary stirrer.

(3) Mass transfer speed

A lightweight module is prepared with both ends of the hollow fiber membrane bundle anchored with an adhesive similar to the module used for (2), and after filling the interior of the membrane with water, the module is immersed in a sealed container filled with purified water, a solution is passed through the hollow sections, and the amount of substance permeating through the membrane into the purified water is measured.

According to the invention, cytochrome C (molecular weight: 12,400), having a molecular weight within the molecular weight range of endotoxin fragments (molecular weight: about 2000-30,000 daltons) is used as the substitute measuring substance for measurement of $Pm_2/Pm_1$. (4) Pore size along cross-section in the membrane thickness direction of a hollow fiber separating membrane

A hollow fiber membrane sample dampened in water is successively immersed in 30%, 50%, 70%, 80%, 90%, 95% and 100% aqueous ethanol solutions, each at 25°C for 30 minutes, to replace the moisture in the hollow fiber membrane with ethanol. Next, the membrane sample is embedded in an epoxy resin and hardened at 60°C for 24 hours. A slice is then prepared from the membrane having a cross-section of about 70 nm in the direction of membrane thickness, and this slice is dyed at 40°C for 15 minutes using a 0.2% aqueous lead citrate solution. A transmission electron microscope (TEM) photograph is taken of the cross-section of the slice. The TEM photograph corresponding to the total cross-section from the inner surface to the outer surface in the direction of the membrane thickness is used for division of 10 equal cross-sectional portions on the photograph, and the pores in each of the resulting cross-sectional portions are analyzed with an image analysis processor (An IP-1000 by Asahi Chemical Industries, KK. was used for the invention), the circle-equivalent radius of each of the pores (radius of a perfect circle of equal area as the pore) is determined, and the average value is calculated as the pore size. Incidentally, according to the invention $D_1$ is the pore size of the cross-sectional portion nearest to the inner surface of the cross-section divided into 10 equal portions, and $D_2$ is the pore size of the cross-sectional portion nearest to the outer surface.

The hollow fiber membrane of the invention is preferably used for hemodialysis in the form of an assembled bundle of multiple fibers housed in a plastic container, with both ends of the bundle anchored with an adhesive to form a module.

The hollow fiber membrane of the invention may be prepared by a manufacturing process characterized by discharging a spinning solution comprising a polymer and a polymer solvent from the outer spinning aperture of a double annular spinning nozzle while discharging a hollow-forming agent from the inner spinning aperture, and coagulating the spinning solution in a coagulating bath of at least 2 stages comprising a solution with a higher coagulation speed than water.

The hollow-forming agent is a gas such as air, nitrogen, carbon dioxide, argon, oxygen, Freon gases such as tetrafluoromethane or hexafluoroethane and other halogen gases, or a liquid which exhibits little or no coagulating action on the spinning solution. Such liquids may be appropriately selected depending on the type of spinning solution. Preferred examples are solutions containing at least one component selected from among perclene, triclene, trichlorotrifluoroethane, methanol, ethanol, propanol, acetone, methyl ethyl ketone, formic acid, acetic acid, propionic acid, and polyols such as glycerin and polyethylene glycol, as well as mixed solutions thereof.

It is an important aspect of the invention that for all of the portions in the direction of membrane thickness of the hollow fiber membrane at the first stage of the coagulating bath, the layers near the outer wall of the hollow fiber membrane coagulate before complete coagulation of the spinning solution, and the layers near the inner wall form in a non-coagulated state and must be led to the next stage coagulation process.

It is another important aspect of the invention that the coagulating bath used for the spinning solution is a solution which gives higher coagulating speed than water, based on the method for measuring the coagulating speed of the spinning solution described below.

Manufacture of a hollow fiber membrane with the structure of the invention requires a multistage coagulating bath using the coagulating solution described above. As a result, the membrane pore structure obtained represents the combined influence of each coagulating effect, such that the hollow fiber membrane of the present invention possesses a pore structure exhibiting excellent performance which is not available from publicly known coagulation processes.

This is explained based on the theory that the balance between the speed at which the polymer solvent separates from the spinning solution and the speed at which the coagulating solution penetrates to the polymer interior determines the size and coagulated stage of the polymer particles formed during the phase separation process between the polymer and the solvent in the coagulating bath, and this in turn determines the pore structure of the hollow fiber membrane.

The type and concentration of the solution used for the coagulating bath and the coagulating speed of the spinning solution in the first-stage coagulating bath may be appropriately set depending on the intended use and desired pore structure for the hollow fiber membrane.

The coagulating speed of the spinning solution may be represented by the solvent elution rate. The solvent elution rate is the proportion of the polymer solvent which elutes from the spinning solution into the coagulating solution when the discharged spinning solution contacts with the coagulating solution, and it is expressed as a percentage by weight. The solvent elution rate is determined by taking samples of the hollow fibers from the first-stage coagulating bath or the solution of the first-stage coagulating bath and measuring the solvent content of each.

When the polymer solvent used for the spinning solution is diluted with water for use as the coagulating solution, or when water is used, hollow fibers with a pore structure according to the invention cannot be obtained even by using a multistage coagulating bath. This is because the coagulation speed of the spinning solution is slower than in water. That is, when an aqueous solution of the polymer solvent is used as the coagulating solution, the coagulation speed of the spinning solution is reduced because of the slower migration rate of the polymer solvent into the coagulating solution, with the result that the pore structure of the hollow fiber membrane obtained thereby is one with smaller pore size changes in the thick membrane section.

For example, Japanese Examined Patent Publication No. 3-31491 discloses a technique for manufacturing a hollow fiber membrane by 2-stage coagulation, wherein the solvent exchange rate at the first coagulating bath aperture is set to 10-75%. According to this technique, the solvent exchange rate is defined as follows.

$$Solvent\ exchange\ rate = \left(\left(1 - \frac{\Sigma zi - \Sigma yi}{\Sigma xi - \Sigma yi}\right) \times 100(\%)\right.$$

xi: Solvent content in spinning stock solution ($0 \leq xi \leq 1.0$)
yi: Solvent content in first coagulating bath ($0 \leq yi \leq 1.0$)
zi: Solvent content in membrane wall at first coagulating bath aperture ($0 \leq zi \leq 1.0$)

According to this definition, the solvent exchange rate is the proportion of the polymer solvent exchanged with the solvent in the coagulating bath when the discharged spinning solution contacts with the coagulating solution in the first coagulating bath.

This definition, therefore, applies only in cases where the polymer solution and the coagulating solution contain the same solvent (for example, as explained in the aforementioned example of the prior art, a case where the polymer solvent is dimethylsulfoxide and the coagulating solution is an aqueous dimethylsulfoxide solution). Consequently, as stated in the aforementioned publication, the hollow fiber membrane is formed with a multilayer structure wherein a layer with a relatively large pore size is formed together with a thin dense layer on the outermost layer of the hollow fiber membrane, and comprises a fine porous layer and a large pore size layer in order towards the inner wall.

A manufacturing process for a hollow fiber membrane of the invention will now be explained based on a manufacturing process for cellulose hollow fiber membranes.

The cellulose spinning solution used is a cellulose solution wherein cellulose is dissolved in a solvent capable of dissolving cellulose. The cellulose concentration in the cellulose spinning solution is preferably 4-12 wt%. When the cellulose concentration is less than 4 wt% the dynamic properties of the resulting hollow fiber membrane are inadequate, and when it exceeds 12 wt%, the spinning solution preparation and spinning procedure are rendered more difficult.

The cellulose spinning solution is prepared by a publicly known process. The cellulose spinning solution is discharged from a double spinning nozzle together with a hollow-forming agent, and is passed through a non-coagulating atmosphere. The discharged spinning solution flow is drawn prior to being fed to the coagulating bath, to create an outer diameter of a few hundred $\mu$m while creating a uniform membrane thickness and inner diameter. A "non-coagulating atmosphere" means an atmosphere which maintains the fluidity of the cellulose solution and allows uniform drawing. The discharged spinning solution and hollow-forming agent are then fed to a plurality of coagulating baths. Baths for water washing may also be provided between the coagulating baths. The coagulating solution used is usually an aqueous solution containing an acid, alkali or neutral salt. Preferred are aqueous solutions of caustic soda, sulfuric acid, hydrochloric acid, acetic acid, ammonium sulfate, ammonium chloride, calcium chloride and sodium chloride, with aqueous solutions of caustic soda, sulfuric acid and ammonium sulfate being particularly preferred. The solutions used for the first and second stage coagulating bath may be either the same or different. The coagulating bath usually consists of two stages, but if necessary a 3-stage or greater multistage coagulating bath may be used.

After scouring the coagulated hollow fiber membrane in water and an aqueous inorganic salt solution, it is provided with a publicly known membrane pore hold-back agent such as glycerin or polyethylene glycol, and dried.

For production of a cuprammonium cellulose hollow fiber membrane, the elution rate of the ammonia from the cuprammonium cellulose solution into the coagulating solution in the first-stage coagulating bath must be set within a range of 12-80%. An ammonia elution rate of less than 12% will tend to result in problems such as fiber breakage due to insufficient coagulation of the polymer solution. If the ammonia elution rate is greater than 80% it becomes difficult to exhibit the effect of the coagulating bath from the second stage onward.

The ammonia elution rate is the proportion of ammonia eluting from the spinning solution into the coagulating solution when the discharged spinning solution contacts the coagulating solution, expressed in terms of percentage by weight, and it represents the coagulated stage of the spinning solution. The ammonia elution rate can be determined by analyzing a sample of the hollow fibers taken out of the coagulating bath or the solution in the first-stage coagulating bath. For manufacture of a cuprammonium cellulose hollow fiber membrane, it is preferred to use an aqueous solution of caustic soda, sulfuric acid or ammonium sulfate for the coagulating bath.

The present invention will now be explained in more detail by way of the following examples.

Examples 1, 2 and 3

A cuprammonium cellulose spinning solution with an 8 wt% cellulose concentration was prepared, and tetrafluoromethane was used as a non-coagulating hollow-forming agent. A double spinning nozzle was then used for discharge of the spinning solution at a flow rate of 18.3 cc/min and the hollow-forming agent at 3.2 cc/min, and after running the discharged fluid through air, a coagulating bath comprising 15 wt% aqueous sulfuric acid and kept at 45°C was used for first-stage coagulation at an immersion length of 0.8 m. The ammonia elution rate at this time was 45%. Immediately after subsequent washing with water, a coagulation bath comprising 11 wt% aqueous caustic soda and kept at 60°C was used for second-stage coagulation at an immersion length of 0.8 m. The resulting hollow fiber membrane was then transported on a belt conveyor. After scouring on the belt conveyor using a shower system with warm water at 50°C, 2 wt% aqueous sulfuric acid at 50°C and warm water at 50°C, a 100% solution of polyethylene glycol 400 ("Macrogol 400", listed in the Japan Pharmacopoeia) was added thereto and it was passed through a tunnel-shaped drying furnace at 170°C, and then coiled up at a rate of 100 m/min to obtain a hollow fiber membrane for Example 1.

A hollow fiber membrane for Example 2 was obtained in exactly the same manner as Example 1, except that the spinning solution used had a cellulose concentration of 5 wt%.

A hollow fiber membrane for Example 3 was also obtained in exactly the same manner as Example 2, except that a coagulating bath kept at 40°C was used for the second-stage coagulation.

Based on a TEM photograph of a cross-section of the hollow fiber membrane of each example, the sizes of the fine pores of the membrane cross-sections were measured by the method described above, giving the results listed in Table 1.

As shown in Table 1, the pore size distribution of the hollow fiber membrane of Example 1 for the cross-section in the direction of membrane thickness was 34, 44, 59, 67, 74, 69, 64, 77, 69 and 40 nm, in that order from the inner surface toward the outer surface of the hollow fibers.

The hollow fiber membrane for each example was bundled and anchored at both ends using a polyurethane-based adhesive to construct a module, and each of the modules was used for measurement of the protein trap volume, water transmissivity and $Pm_2/Pm_1$.

The results are listed in Table 1.

Comparative Example 1

A hollow fiber membrane was obtained for Comparative Example 1 in exactly the same manner as Example 1, except that the discharged fluid was coagulated using 11 wt% aqueous caustic soda at 40°C, with an immersion length of 1.6 m. The evaluation results for the resulting hollow fiber membrane are listed in Table 1.

Comparative Example 2

A hollow fiber membrane was obtained for Comparative Example 2 in exactly the same manner as Example 1, except that the discharged fluid was coagulated using 15 wt% aqueous sulfuric acid at 45°C, with an immersion length of 1.6 m. The evaluation results for the membrane are listed in Table 1.

As shown in Table 1, the pore size distribution of the hollow fiber membrane of Comparative Example 2 for the cross-section in the direction of membrane thickness was 74, 69, 66, 67, 64, 61, 58, 55, 53 and 43 nm, in that order from the inner surface toward the outer surface of the hollow fibers.

Comparative Example 3

A polysulfone hollow fiber separating membrane was manufactured based on the descriptions in Japanese Unexamined Patent Publications No. 6-238139 and No. 6-296686. That is, 18 parts of a polysulfone resin (P-1700, Amoco Performance Products), 5 parts of polyvinyl pyrrolidone (Plasdon K-90, I.S.P., molecular weight: 360,000) and 77 parts of N,N-dimethylacetamide were combined into a uniform solution. The viscosity of this stock solution was 3,800 centipoise. A tube-in-orifice type hollow spinning nozzle was used for discharge of a 50% aqueous N,N-dimethylacetamide solution as the internal coagulating solution with simultaneous discharge of the stock solution while maintaining its temperature at 45°C. After immersing the stock solution in a 50°C warm water bath provided 40 cm below it, it was coiled up at a rate of 50 m/min. The evaluation results for the resulting hollow fiber separating membrane are listed in Table 1.

| | $D_1$ [nm] | $D_2/D_1$ [-] | $D_3/D_1$ [-] | $\rho_1$ [%] | $\rho_2$ [%] | Water transmissivity [ml/m$^2$ · hr · mmHg | Protein trap [μg/cm$^2$] | $Pm_2/Pm_1$ [-] |
|---|---|---|---|---|---|---|---|---|
| Ex. 1 | 34 | 1.18 | 1.88 | 72.9 | 92.5 | 45 | 17.7 | 0.9 |
| 2 | 38 | 1.13 | 1.45 | 14.7 | 66.5 | 54 | 15.5 | 1.0 |
| 3 | 29 | 0.63 | 2.10 | 151.7 | 184.2 | 33 | 13.2 | 1.0 |
| Comp. Ex. 1 | 27 | 1.00 | 0.89 | -1.9 | -11.1 | 20 | 24.2 | 0.9 |
| 2 | 74 | 0.58 | 0.78 | -10.8 | 27.3 | 49 | 64.2 | 0.9 |
| 3 | 175 | 2.19 | - | - | - | 350 | 24.4 | 1.5 |

Industrial Applicability

The hollow fiber membrane of the present invention is a hollow fiber membrane which maintains excellent performance for removal of high molecular weight substances in blood, particularly $\beta_2$ microglobulin, while preventing penetration of endotoxin fragments from the dialyzing solution into the bodies of patients, and has excellent biocompatibility making it possible to avoid various bodily reactions or complications arising therefrom. The hollow fiber membrane of the invention is particularly useful as a hemodialysis membrane for hemodialysis apparatuses.

Claims

1. A hollow fiber membrane with a water transmissivity of 30-300 ml/m$^2$ · hr · mmHg and a membrane thickness of 5-50 μm, having pores which satisfy the following conditions ① to ④, wherein the pore size increases in a continuous manner from the inner wall surface toward the interior of the membrane while decreasing in a continuous manner from the interior of the membrane toward the outer wall surface, and the hollow fiber membrane has at least one maximum size area in the interior of the membrane.

① $10 \leq D_1 \leq 300$ nm      $D_1$: pore size on inner wall surface
② $0.6\, D_1 \leq D_2 \leq 1.2\, D_1$      $D_2$: pore size on outer wall surface
③ $D_3 \geq 1.2\, D_1$      $D_3$: pore size inside membrane
④ Inner wall layer pore size increase rate ($\rho_1$) and outer wall layer pore size decrease rate ($\rho_2$) = 20-200% ($\rho_1$ and $\rho_2$ are, respectively, the rate of increase in pore size from the inner wall surface to 3/10 of the membrane thickness from the inner wall surface, and the rate of decrease in pore size from the outer wall surface to 3/10 of the membrane thickness from the outer wall surface, based on 10 equal divisions of the membrane thickness.)

2. A hollow fiber membrane according to claim 1, wherein the water transmissivity is 30-80 ml/m$^2$ • hr • mmHg.

3. A hollow fiber membrane according to claim 1 which is a cellulose hollow fiber membrane.

4. A hollow fiber membrane according to claim 3 which is a cuprammonium process cellulose hollow fiber membrane.

5. A hollow fiber membrane according to any of claims 1 to 4, wherein $20 \leq D_1 \leq 100$ nm.

6. A process for manufacturing a hollow fiber membrane, characterized by discharging a spinning solution comprising a polymer and a polymer solvent from the outer spinning aperture of a double annular spinning nozzle while discharging a hollow-forming agent from the inner spinning aperture, and coagulating the spinning solution in a coagulating bath of at least 2 stages comprising a solution which gives a higher coagulation speed than water.

7. A process for manufacturing a hollow fiber membrane according to claim 6, wherein a 4-12 wt% cellulose spinning solution is discharged from the outer spinning aperture of a double annular spinning nozzle.

8. A process for manufacturing a hollow fiber membrane according to claim 6, wherein a 4-12 wt% cuprammonium cellulose spinning solution is discharged from the outer spinning aperture of a double annular spinning nozzle while discharging a hollow-forming agent from the inner spinning aperture, the discharged solution is sent to a first-stage coagulating bath comprising an aqueous solution containing no copper or ammonia and, after 12-80% elution of the ammonia from the cuprammonium cellulose solution, it is then sent to a second-stage coagulating bath.

9. A process for manufacturing a hollow fiber membrane according to claim 8, wherein the coagulating bath is an aqueous solution containing at least one component selected from sulfuric acid, caustic soda and ammonium sulfate.

# Fig.1

| INTERNATIONAL SEARCH REPORT | International application No. |
|---|---|
| | PCT/JP97/00330 |

**A. CLASSIFICATION OF SUBJECT MATTER**

Int. Cl$^6$ B01D69/08, B01D71/10, D01D5/24, D01F2/04

According to International Patent Classification (IPC) or to both national classification and IPC

**B. FIELDS SEARCHED**

Minimum documentation searched (classification system followed by classification symbols)

Int. Cl$^6$ B01D69/08, B01D71/10, D01D5/24, D01F2/04

Documentation searched other than minimum documentation to the extent that such documents are included in the fields searched.

| | | |
|---|---|---|
| Jitsuyo Shinan Koho | 1926 – 1996 | Jitsuyo Shinan Keisai |
| Kokai Jitsuyo Shinan Koho | 1971 – 1996 | Koho 1996 – 1997 |
| Toroku Jitsuyo Shinan Koho | 1994 – 1997 | |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 59-204911, A (Asahi Chemical Industries Co., Ltd.), November 20, 1984 (20. 11. 84), Claim; page 3, upper left column, line 8 to lower right column, line 18 & EP, 126994, A & US, 4822540, A & CA, 1236956, A & DK, 216584, A | 1 – 5 |
| Y | JP, 54-145379, A (Asahi Chemical Industry Co., Ltd.), November 13, 1979 (13. 11. 79), Claim & DE, 2917357, A & FP, 2424750, A & GB, 2025312, A & US, 4351860, A | 1-2, 5 |
| Y | JP, 60-45358, A (Sumitomo Bakelite Co., Ltd.), March 11, 1985 (11. 03. 85), Claim; page 4, upper right column, line 18 to lower left column, line 10 (Family: none) | 1-2, 5 |
| A | JP, 57-35905, A (Asahi Chemical Industry Co., Ltd.), | 1-5, 8-9 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| May 6, 1997 (06. 05. 97) | May 20, 1997 (20. 05. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

11

## INTERNATIONAL SEARCH REPORT

International application No.

PCT/JP97/00330

C (Continuation). DOCUMENTS CONSIDERED TO BE RELEVANT

| Category* | Citation of document, with indication, where appropriate, of the relevant passages | Relevant to claim No. |
|---|---|---|
| | February 26, 1982 (26. 02. 82),<br>Claim; page 2, lower left column, line 7 to<br>page 3, upper right column, line 9; page 4,<br>upper right column, line 13 to lower left<br>column, line 18 (Family: none) | |
| A | JP, 59-160507, A (Kuraray Co., Ltd.),<br>September 11, 1984 (11. 09. 84),<br>Claim (Family: none) | 6 – 9 |
| A | JP, 53-106769, A (Japan Exlan Co., Ltd.),<br>September 18, 1978 (18. 09. 78),<br>Claim (Family: none) | 6 |

Form PCT/ISA/210 (continuation of second sheet) (July 1992)